(19) Europäisches Patentamt
European Patent Office
Office européen des brevets

(11) **EP 2 425 623 B1**

(12) **FASCICULE DE BREVET EUROPEEN**

(45) Date de publication et mention
de la délivrance du brevet:
**06.04.2016 Bulletin 2016/14**

(21) Numéro de dépôt: **10716801.5**

(22) Date de dépôt: **16.04.2010**

(51) Int Cl.:
***H04N 19/63*** *(2014.01)*

(86) Numéro de dépôt international:
**PCT/EP2010/055070**

(87) Numéro de publication internationale:
**WO 2010/124949 (04.11.2010 Gazette 2010/44)**

(54) **PROCEDE D'ESTIMATION DU DEBIT ET DE LA DISTORSION DE DONNEES D'IMAGES CODEES A POSTERIORI DE L'ENCODAGE**

VERFAHREN ZUM SCHÄTZEN VON DURCHSATZ UND VERZERRUNGEN VON CODIERTEN BILDDATEN NACH DER CODIERUNG

METHOD FOR ESTIMATING THE THROUGHPUT AND THE DISTORTION OF ENCODED IMAGE DATA AFTER ENCODING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.04.2009 FR 0902068**

(43) Date de publication de la demande:
**07.03.2012 Bulletin 2012/10**

(73) Titulaire: **THALES**
**92400 Courbevoie (FR)**

(72) Inventeurs:
- **PAPIN, Christophe**
  **F-92704 COLOMBES Cedex (FR)**
- **NICHOLSON, Didier**
  **92704 COLOMBES Cedex (FR)**
- **BERGERON, Cyril**
  **92704 COLOMBES Cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
- CHO S ET AL: "Optimal Error Protection for Real-Time Image and Video Transmission" IEEE SIGNAL PROCESSING LETTERS, IEEE SERVICE CENTER, PISCATAWAY, NJ, US, vol. 11, no. 10, 1 octobre 2004 (2004-10-01), pages 780-783, XP011119017 ISSN: 1070-9908
- DAVID S TAUBMAN ED - ANONYMOUS: "Localized Distortion Estimation from Already Compressed JPEG2000 Images" IMAGE PROCESSING, 2006 IEEE INTERNATIONAL CONFERENCE ON, IEEE, PI, 1 octobre 2006 (2006-10-01), pages 3089-3092, XP031049330 ISBN: 978-1-4244-0480-3
- MARCELLIN M W ET AL: "An overview of quantization in JPEG 2000" SIGNAL PROCESSING. IMAGE COMMUNICATION, ELSEVIER SCIENCE PUBLISHERS, AMSTERDAM, NL, vol. 17, no. 1, 1 janvier 2002 (2002-01-01), pages 73-84, XP004326799 ISSN: 0923-5965
- MANDAL M K ET AL: "Efficient Channel Protection for JPEG2000 Bitstream" IEEE TRANSACTIONS ON CIRCUITS AND SYSTEMS FOR VIDEO TECHNOLOGY, IEEE SERVICE CENTER, PISCATAWAY, NJ, US, vol. 14, no. 4, 1 avril 2004 (2004-04-01), pages 554-558, XP011110026 ISSN: 1051-8215

**Description**

La présente invention a pour objet un procédé d'estimation du débit et de la distorsion d'un flux de données d'images compressées, ladite estimation étant effectuée a posteriori de l'étape de compression.

Le champ d'application de l'invention est celui de la transmission d'images à travers un canal de communication à débit contraint et soumis à des erreurs, par exemple un canal sans fil de type hertzien. Le débit limité disponible pour la transmission nécessite une compression du flux de données d'images, à cet effet un des standards de compression d'image couramment utilisé et pour lequel l'invention s'applique avantageusement est le standard JPEG 2000 (Joint Photographic Expert Group) développé par l'Organisation Internationale de normalisation connue sous l'abréviation anglo-saxonne ISO. L'invention s'applique également dans le cadre de réseaux de communications hétérogènes comportant de nombreux noeuds de communication intermédiaires pour lesquels il est important de pouvoir déterminer les caractéristiques du flux d'images transmis sans avoir à effectuer une étape de décompression trop pénalisante en terme de complexité de calculs et de délai introduit dans la transmission. La connaissance des caractéristiques telles que le débit ou la distorsion d'un flux d'images compressées sont utiles lorsqu'on cherche, par exemple, à les modifier au cours d'une étape de transcodage. Les utilisations possibles de l'invention concernent tous les systèmes mettant en oeuvre des transmissions de flux d'images compressées à travers des canaux de propagation sujets à erreurs, par exemple les systèmes d'imagerie à la demande, de diffusion, de réseaux de capteurs sans fils ou encore de vidéo surveillance.

Dans un contexte de transmission de données d'images compressées où le débit disponible et les perturbations impactant le canal sont variables, il est nécessaire de pouvoir adapter à tout moment le débit utile d'un flux de données compressées ainsi que sa résistance aux erreurs afin de s'adapter aux variations des contraintes dues à l'environnement. A cet effet, il est donc important de pouvoir estimer les caractéristiques d'un flux d'images compressées telles que le débit et la distorsion de compression, a posteriori de l'étape de compression et sans effectuer de décodage dudit flux. Une autre caractéristique importante à estimer est la distorsion de l'image décodée résultant de la perte ou de la corruption lors de sa transmission d'un paquet contenu dans le flux compressé. Cette information permet de mesurer l'influence sur le rendu visuel des erreurs de propagation qui impactent le canal de transmission et d'en déduire, notamment, une stratégie appropriée de protection du flux compressé par ajout de redondance.

La problématique de l'estimation de débit et de distorsion d'un flux d'images compressées est notamment traitée dans le contexte de l'allocation débit/distorsion qui vise à déterminer les meilleurs paramètres de quantification à appliquer par un mécanisme de compression d'images afin d'obtenir une distorsion sur l'image décodée la plus faible possible pour un débit donné. Le document [1] propose plusieurs modèles d'allocation de débit et/ou de distorsion pour le codage d'images et de vidéos, cependant il ne traite pas le problème de l'estimation de la distorsion sur des flux images déjà compressés et sans connaissance a priori de l'image encodée.

Des méthodes de modélisation de la sensibilité aux erreurs d'un flux vidéo existent telle que celle divulguée dans le brevet français [2], mais ce dernier se limite au cas d'application au standard vidéo H.264. Le procédé mis en oeuvre dans ce brevet suppose, de plus, une interaction avec le codeur source et/ou la connaissance, du point de vue du récepteur, de la séquence vidéo d'origine transmise.

Le document CHO S ET AL: "Optimal Error Protection for Real-Time Image and Video Transmission",IEEE SIGNAL PROCESSING LETTERS, IEEE SERVICE CENTER, PISCATAWAY, NJ, US, vol. 11, no. 10, 1 octobre 2004 (2004-10-01), pages 780-783, divulgue un procédé d'estimation de la distorsion qui se base sur le décodage correct d'un nombre R de bits et le décodage incorrect des bits suivants.

Afin de compenser, notamment, les limitations de l'art antérieur précédemment introduites, l'invention propose une solution permettant d'estimer les paramètres de débit et de distorsion d'une séquence d'images préalablement compressées et ce sans nécessiter de décompression ni de connaissance a priori de l'image encodée. Il repose notamment sur l'utilisation d'un modèle de prédiction de la distorsion d'une image décodée lorsqu'un paquet compris dans le flux transmis est perdu.

A cet effet, l'invention a pour objet un procédé d'estimation du débit et de la distorsion d'au moins une image compressée à l'aide d'au moins une opération de transformée en ondelettes délivrant au moins une sous-bande b contenant des coefficients, ladite sous-bande étant subdivisée en au moins un paquet de coefficients associé à une couche de qualité de la compression, ledit paquet comportant en plus un entête de paquet et étant transmis à travers un canal de propagation, ledit procédé étant caractérisé en ce qu'il comprend au moins les étapes suivantes:

     ◦ une étape d'estimation de la distorsion $D_b^c$ liée à la compression des coefficients dudit paquet,

     ◦ une étape d'estimation de la distorsion $D_b'^c$ liée à la corruption ou à la perte dudit paquet lors de sa transmission,

     ◦ une étape d'estimation du débit $L_b$ de compression de ladite sous-bande b,

     ◦ une étape d'estimation de la sensibilité $\tilde{D}_b^c$ dudit paquet en fonction des distorsions $D_b^c$ et $D_b'^c$ et du débit $L_b$ de ladite sous-bande b et de la couche de qualité d'indice i associée audit paquet (106),

◦ une étape d'estimation de la distorsion de ladite image liée à la décompression dudit paquet à partir de sa sensibilité $\tilde{D}_b^c$ .

Selon une variante de réalisation de l'invention, ledit paquet est associé à une couche i de qualité de la compression et l'étape d'estimation de la sensibilité est réalisée à l'aide de la relation suivante :

$$\tilde{D}_b^c = \prod_{i=1}^{k}\left(1 - P_{errb}^{\ c_i}\right) \cdot D_b^{c_k} + \sum_{i=2}^{k}\left( P_{errb}^{\ c_i} \prod_{j=1}^{i-1}\left(1 - P_{errb}^{\ c_j}\right) \cdot D_b^{c_{i-1}} \right) + P_{errb}^{\ c_1} \cdot \frac{D_b'}{T_b} T_b^c ,$$

où $P_{err}^{\ c_i}b$ est la probabilité que le paquet d'indice $c_i$ correspondant à la couche de qualité i de la sous-bande b soit erroné, $D_b^{c_i}$ est sa distorsion de compression, $D_b'$ est la distorsion de corruption de la sous-bande b, $T_b^c$ et $T_b$ sont les nombres de coefficients respectivement contenus dans ledit paquet c et ladite sous-bande b.

Selon une variante de réalisation de l'invention, l'estimée de la distorsion $D_b^c$ liée à la compression est obtenue à l'aide de la relation suivante:

$$D_b^c = \frac{\Delta_b^c}{12} = \frac{\Delta_b . \Delta tr_b^c}{12} ,$$

où $\Delta_b$ est un pas de quantification lié à la compression et $\Delta tr_b^c$ est un pas de quantification lié à une étape de troncature des coefficients résultant de la compression.

Selon une variante de réalisation de l'invention, le pas de quantification $\Delta tr_b^c$ est obtenu à partir de paramètres caractéristiques de ladite sous-bande b tels que le nombre de bits de quantification des coefficients de ladite sous-bande b, le nombre de plans de bits à zéro, et le nombre de passes de codage appliquées aux plans de bits desdits coefficients, les valeurs desdits paramètres caractéristiques étant déterminées à partir desdits entêtes dudit flux de données compressées.

Selon une variante de réalisation de l'invention, l'estimée de la distorsion $D_b'$ liée à la corruption de la sous-bande b est obtenue à l'aide de la relation suivante :

$$D_b' = D_b . 2^{2L_b}$$

où $D_b$ est la distorsion liée à la compression de la sous-bande b

Selon une variante de réalisation de l'invention, l'estimation du débit $L_b$ de la sous-bande b est obtenu en divisant la somme des longueurs exprimées en octets de tous les paquets inclus dans la sous-bande b par le nombre de coefficients contenus dans la sous-bande b.

Selon une variante de réalisation de l'invention, le procédé comprend en plus les sous étapes suivantes:

◦ une étape d'estimation de l'erreur quadratique moyenne de ladite image compressée à partir de la sensibilité $\tilde{D}_b^c$ de chaque paquet dudit flux compressé.

◦ une étape d'estimation du débit total L de compression de ladite image obtenu en faisant la somme des débits $L_b$ de chaque sous-bande b pondérés par le rapport entre le nombre de coefficients de la sous-bande b et la taille de l'image en pixels.

Selon une variante de réalisation de l'invention, le mécanisme de compression d'images mis en oeuvre respecte le standard JPEG 2000 et ledit paquet est un code-bloc.

Selon une variante de réalisation de l'invention, le procédé comprend en plus une étape de transcodage au cours de laquelle lesdites estimées de débit $L_b^c$ et de sensibilité $\tilde{D}_b^c$ sont utilisées pour supprimer, protéger ou adapter le débit d'au moins un desdits paquets du flux compressé.

Selon une variante de réalisation de l'invention, ladite étape de transcodage respecte le standard JPWL.

L'invention a également pour objet une utilisation du procédé décrit précédemment caractérisée en ce que les distorsions $D_b^c$ et $D_b'^c$ sont utilisées afin de déterminer une mesure de la qualité de ladite image.

D'autres caractéristiques et avantages de la présente invention apparaîtront mieux à la lecture de la description qui suit en relation aux dessins annexés qui représentent:

La figure 1, une illustration de la syntaxe d'un flux de code JPEG 2000,
La figure 2, une représentation du résultat d'une transformée en ondelettes sur deux niveaux de résolution,
La figure 3, une représentation de la notion de plan de bits dans un code-bloc,
La figure 4, un exemple de système adapté à exécuter les étapes selon l'invention.

Le standard JPEG 2000 (Joint Picture Expert Group 2000), tel que décrit notamment dans [3] définit un mécanisme de compression d'images avec ou sans perte utilisant une transformation en ondelettes.

La partie 11 de ce standard référencée sous l'abréviation anglo-saxonne JPWL (JPEG 2000 Wireless) et décrite dans le document [4] définit une syntaxe et des outils permettant de protéger les données encodées au format JPEG 2000 en amont de leur transmission à travers un canal bruité hertzien. Cette phase de protection des données peut s'effectuer ultérieurement à la phase de compression dans une étape connue de l'Homme du métier sous le terme de transcodage. Un encodeur respectant le standard JPWL se décompose principalement en trois modules : un encodeur au standard JPEG 2000 qui délivre un flux compressé, un module de génération de la sensibilité aux erreurs dudit flux compressé et un module de protection qui permet d'insérer de la redondance dans le flux compressé à partir des informations de sensibilité aux erreurs. Ces deux derniers modules sont indépendants du codeur source JPEG 2000 et peuvent s'appliquer directement sur un flux déjà compressé lors d'une étape de transcodage. Cette particularité présente l'avantage de permettre l'insertion de protection aux erreurs à un endroit quelconque de la chaine de transmission et non nécessairement immédiatement après l'étape de compression.

Dans la suite de la description, le terme code-bloc est utilisé en référence à un ensemble de coefficients obtenus par transformée en ondelettes et appartenant à une sous-bande donnée. Ce terme est introduit dans la définition du standard [3] JPEG 2000.

L'utilisation du terme sensibilité en référence à un paquet de données d'image compressée ou à un code-bloc contenant des données d'image compressée désigne la distorsion sur l'image décodée résultant de la décompression de ce paquet ou code-bloc. Le terme « sensibilité » est utilisé car il s'agit ici de mesurer l'influence d'erreurs impactant les données contenues dans ledit paquet ou code-bloc sur le rendu visuel de l'image transmise.

Le standard JPWL définit des moyens d'insérer dans le flux compressé des informations de sensibilité aux erreurs et des informations de redondance. Il décrit notamment la structure et l'encapsulation des données ajoutées a posteriori de l'encodage. L'information de sensibilité aux erreurs est utilisée en particulier dans un mécanisme de protection inégale aux erreurs qui vise à répartir la protection par ajout de redondance de façon inégale sur les différents paquets qui composent le flux compressé de façon à prendre en compte l'impact différent des erreurs de propagation sur chacun de ces paquets. Par exemple, les entêtes de paquets contenant des informations de signalisation ou des paramètres de décompression indispensables au décodage du flux ont intrinsèquement une sensibilité aux erreurs plus accrue que certaines parties des données d'images compressées. Afin de mettre en oeuvre le type de mécanisme de protection inégale aux erreurs introduit précédemment, il est nécessaire de définir des valeurs de sensibilité pertinentes affectées aux différents paquets qui composent un flux compressé ce que ne décrit pas le standard JPWL. La présente invention propose donc à cet effet une méthode d'estimation du débit et de la distorsion d'un flux d'images compressées permettant de différencier les paquets composant un flux de code JPEG 2000 en fonction de leur sensibilité aux erreurs.

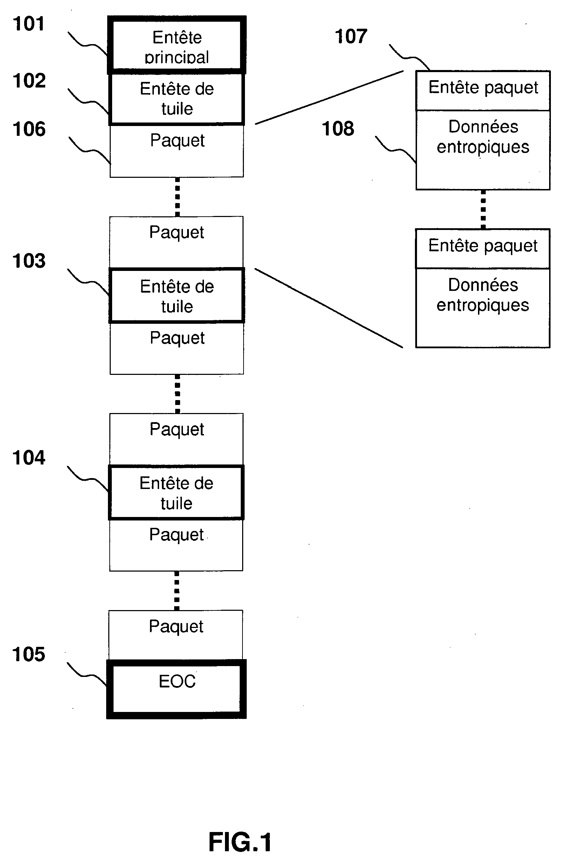

La figure 1 schématise la structure d'un flux de données au format résultant de la compression JPEG 2000 d'une image. Ce flux est notamment composé d'un entête principal 101 suivi par un ou plusieurs entêtes de tuiles 102,103,104 qui délimitent les données associées à une tuile qui est une zone rectangulaire de l'image considérée définie en tant que telle par le standard JPEG 2000. Un entête de tuile 101 est suivi de plusieurs paquets 106 qui comprennent chacun un entête de paquet 107 et des données entropiques 108 associées à une zone de l'image et à une sous bande. Un paquet 107 peut contenir plusieurs codes-bloc. Un flux de code JPEG 2000 se termine toujours par un marqueur de fin de flux 105 connu sous le terme anglo-saxon « End of Codestream » EOC.

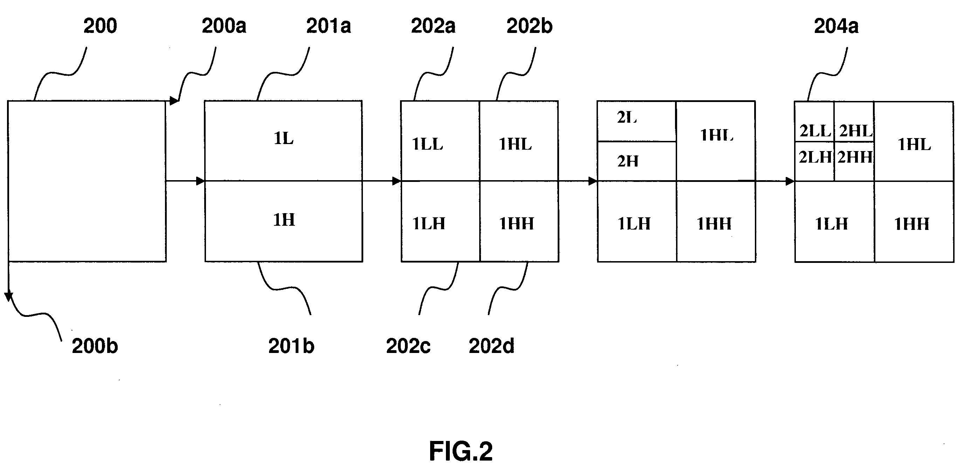

La figure 2 schématise le principe connu de l'Homme du métier de la décomposition d'une image en sous bandes suite à une transformée en ondelettes, technique connue dans le domaine de la compression de données numériques. Une image 200 de résolution donnée est soumise à une première étape de décomposition en ondelettes aboutissant aux sous-bandes 201 a et 201 b. Cette première étape consiste à appliquer, selon l'axe vertical 200b de l'image 200, respectivement un filtrage passe bas permettant d'obtenir une première sous-bande 1 L 201 a puis un filtrage passe haut permettant d'obtenir une seconde sous-bande 1 H 201 b. Dans une seconde étape les mêmes opérations de filtrage passe bas et filtrage passe haut sont appliquées suivant l'axe horizontal 200a afin d'obtenir au total quatre sous-bandes 1 LL,1 HL,1 LH et 1HH. Ces quatre sous-bandes correspondent respectivement à l'image d'origine avec une résolution divisée par deux 202a, et trois images de détails 202b,202c,202d qui donnent les hautes fréquences de l'image originale. L'application du mécanisme précédemment décrit sur l'image 202a de résolution divisée par deux permet d'obtenir, in fine, une image 204 de résolution divisée par quatre par rapport à l'image 200 d'origine.

Dans la suite de la description, une sous-bande désignera le résultat d'une étape de filtrage passe haut ou passe bas, selon une transformée en ondelettes, appliquée à l'image d'origine 200 ou à une autre sous-bande 201a,201b,202a,202b,202c,202d. Les coefficients d'une sous bande désignent les coefficients obtenus par une opération de transformée en ondelettes.

Dans un procédé de l'art antérieur de compression d'une image selon le standard JPEG 2000, les coefficients de chaque sous-bande obtenue sont ensuite quantifiés et divisés en plusieurs codes-blocs qui contiennent les coefficients issus de la décomposition en ondelettes. Les codes-blocs correspondent à l'unité de base du codage entropique opéré par le standard JPEG 2000 et sont codés indépendamment. Les coefficients de ces code-blocs sont quantifiés et le résultat de cette quantification peut être représenté de manière tridimensionnelle, afin de faire apparaître la notion de plans de bits. Un paquet JPEG2000 peut contenir plusieurs code-blocs.

Dans l'exemple qui est décrit par la suite, le procédé d'estimation du débit/distorsion selon l'invention est appliqué à un code-bloc mais il peut être généralisé à tout paquet contenant des données compressées associées à une sous-bande obtenue par une opération de transformée en ondelettes d'une image.

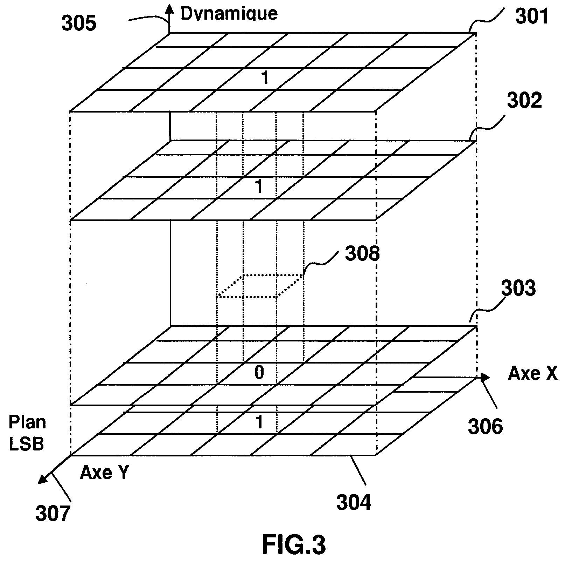

La figure 3 illustre une représentation en trois dimensions de la notion de plan de bits. Un ensemble de coefficients, par exemple des coefficients d'une sous bande, sont représentés dans un repère à trois axes. Le premier axe 305 représente la dynamique d'un coefficient, c'est-à-dire la représentation binaire du coefficient quantifié. Les deux autres axes 306,307 correspondent aux positions à l'intérieur du code-bloc du coefficient. Un coefficient quantifié comporte un nombre donné de bits que l'on range classiquement du bit le moins significatif connu par l'acronyme anglo-saxon LSB (Least Signifiant Bit) au bit le plus significatif ou MSB (Most Signifiant Bit). Un plan de bit 301,302,303,304 correspond aux bits de même rang de l'ensemble des coefficients d'un code-bloc. Par exemple, le plan MSB 301 contient les bits les plus significatifs de tous les coefficients pour un code-bloc considéré. De façon similaire le plan LSB 304 contient les bits les moins significatifs. Un coefficient 308 est représenté par l'ensemble de ses bits appartenant chacun à un plan de bit distinct.

Dans une étape de compression selon le standard JPEG 2000 les coefficients quantifiés sont ensuite encodés, notamment par un codage arithmétique réalisé en trois passes et appliqué à chaque plan de bits en commençant par le plan du bit le plus significatif.

Le procédé selon l'invention consiste, notamment, à estimer le débit et la distorsion de tout ou partie d'un flux d'images compressées, par exemple selon le standard JPEG 2000, à partir d'informations extraites des différents entêtes de ce flux. En particulier, l'invention s'applique à un ou plusieurs codes-bloc ou à tout ensemble regroupant une pluralité de coefficients issus d'une transformée en ondelettes.

La distorsion d'une image ou partie d'image transmise au travers d'un canal sans fil puis décompressée résulte de deux phénomènes distincts. Tout d'abord il existe une distorsion D inhérente à l'opération de compression qui impacte chaque code-bloc même si celui-ci est correctement reçu à l'issue de sa transmission sur un canal sans fil donné. Cette première distorsion est essentiellement due aux opérations de quantification qui ont lieu lors de l'étape de compression et qui induisent des pertes d'information. Ensuite, il existe une distorsion D' liée à la perte ou à la corruption d'un paquet ou d'un code bloc lors de la transmission sur un canal soumis à erreurs de propagation. A partir des deux termes de distorsion D et D' introduits, il est possible de déterminer la sensibilité intrinsèque d'un paquet de données compressées à l'aide de la relation suivante :

$$\tilde{D} = \left(1 - P_{err}\right) \cdot D + P_{err} \cdot D' \quad (1)$$

avec $P_{err}$ la probabilité que le paquet transmis sur un canal de transmission ne soit pas correctement reçu.
La sensibilité d'un paquet désigne la contribution dudit paquet à la distorsion engendrée sur l'image décodée.
Le procédé selon l'invention permet notamment de déterminer, pour chaque paquet, les deux termes de distorsion D et D' utiles au calcul de la sensibilité intrinsèque dudit paquet.

Le document [1] introduit un modèle asymptotique d'évaluation de la distorsion de compression d'une sous-bande en fonction du pas de quantification utilisé pour quantifier les coefficients de cette sous-bande obtenus par une étape de transformée en ondelettes. Sous une hypothèse de haute résolution, il est connu que la densité de probabilité des coefficients d'une transformée en ondelettes peut être approchée par une distribution Gaussienne généralisée de moyenne nulle pour chaque sous-bande. Les coefficients d'une transformée en ondelettes sont supposés indépendants et identiquement distribués dans chaque sous-bande. Les hypothèses de stationnarité et d'ergodicité sont également retenues de façon à pouvoir estimer les caractéristiques statistiques des différentes sous-bandes simplement. La distorsion D due à la compression peut être reliée au pas de quantification $\Delta$ à l'aide de la relation suivante :

$$D = \frac{\Delta^2}{12} \quad (2)$$

Afin de déterminer la distorsion liée à la quantification scalaire et à l'étape de troncature opérée lors du codage par plan de bits des coefficients de transformée en ondelettes, la relation (2) est appliquée à un code-bloc. L'étape de troncature a pour but notamment de diminuer le débit en supprimant les plans de bits les moins significatifs. Dans le cadre d'une compression respectant le standard JPEG 2000 cette étape est mise en oeuvre par un mécanisme d'allocation en débit/distorsion. Elle est assimilable à une quantification scalaire car la troncature de N plans de bits est équivalente à une division par $2^N$. On obtient ainsi le pas de quantification équivalent $\Delta_b^c$ associé à un code-bloc c d'une sous bande b à l'aide de la relation suivante :

$$\Delta_b^c = \Delta_b . \Delta tr_b^c \quad (3)$$

avec $\Delta_b$ le pas de quantification appliqué à la sous-bande b et $\Delta tr_b^c$, le pas de quantification lié à l'étape de troncature.

Le pas de quantification appliqué à une sous-bande b est défini dans le standard JPEG 2000 par la relation suivante :

$$\Delta_b = 2^{R_B - \varepsilon_b} \left( 1 + \frac{\mu_b}{2^{11}} \right) \quad (4)$$

où $R_B$ est la dynamique nominale de la sous-bande b ,

$$R_B = R_I + \log_2 (\gamma_b) . (5)$$

Les valeurs des différents paramètres $R_I$, $\varepsilon_b$, $\mu_b$ et $\gamma_b$ utiles à la détermination du pas de quantification de la sous-bande b peuvent être extraites des entêtes des paquets du flux compressé au format JPEG 2000.

$R_I$ est le nombre de bits utilisés pour représenter les composantes des pixels de l'image source et peut être déterminé par le marqueur SIZ(« Image and Tile Size Marker ») présent dans l'en-tête principal 101 et qui définit, selon le standard JPEG 2000, la taille d'une tuile et de l'image associée.

$\varepsilon_b$ est l'exposant du pas de quantification de la sous-bande b qui peut être déterminé à partir du marqueur QCC (« Quantization Component Marker ») inclus dans l'entête principal 101 et dans l'entête de tuile 102,103,104.

$\mu_b$ est la mantisse du pas de quantification de la sous-bande b et est spécifiée dans le marqueur QCD (« Quantization Default Marker ») présent dans l'entête principal 101 et dans l'entête de tuile 102,103,104.

$\gamma_b$ est le gain de la sous-bande b qui est défini dans le standard JPEG 2000 en fonction du type de sous-bande.

Afin de déterminer le second terme $\Delta tr_b^c$ nécessaire au calcul du pas de quantification associé à un code-bloc, il faut connaître le nombre de plans de bits tronqués lors de l'étape d'allocation en débit et distorsion selon le standard JPEG 2000. Cette information peut être obtenue à partir du nombre de plans de bits conservés qui peut être calculé grâce aux données stockées dans les en-têtes des paquets. Soient $nb\_bitplanes_b^c$ le nombre de plans de bits conservés par l'algorithme d'allocation en débit/distorsion mis en oeuvre dans le cadre d'une compression respectant le standard JPEG 2000 et $nb\_bitplanes\_tr_b^c$ le nombre de plans de bits tronqués dans le code-bloc d'indice c de la sous-bande d'indice b. Chaque plan de bits est codé en trois passes, excepté le premier plan de bits qui est codé en une passe et le bit de signe qui est codé lors de la première passe dite de signifiance. Le dernier plan de bits est supposé conservé si le résultat d'une au moins des passes de codage appliquée à ce plan de bits est conservé. Enfin le nombre de plans de bits à zéro qui permet de déterminer le bit le plus significatif est codé séparément.

Le nombre de plans de bits conservés $nb\_bitplanes_b{}^c$ est donc donné par la relation suivante:

$$nb\_bitplanes_b{}^c = IMSB_b{}^c + \left\lceil \frac{nb\_passes_b{}^c - 1}{3} \right\rceil + 2 \quad (6),$$

où $IMSB_b{}^c$ est le nombre de plans de bits à zéro situés avant le plan du bit le plus significatif. La valeur de ce nombre de plans de bits à zéro peut être extraite de l'entête du paquet contenant le code-bloc d'indice c de la sous-bande b, $nb\_passes_b{}^c$ est le nombre de passes de codage conservées par l'algorithme d'allocation en débit/distorsion qui peut être également extrait de l'entête du paquet.

Le nombre de plans de bits tronqués correspond à la différence entre le nombre de bits $M_b$ restants après l'étape de quantification scalaire et le nombre de bits conservés lors de l'étape d'allocation en débit/distorsion $nb\_bitplanes_b{}^c$.

$$nb\_bitplanes\_tr_b{}^c = M_b - nb\_bitplanes_b{}^c, \quad (7)$$

Le nombre de bits $M_b$ peut être obtenu à partir des marqueurs QCC et QCD présents dans l'entête principale 101 et les entêtes de tuiles 102,103,104,105.

A partir de la relation (7) on peut en déduire le pas de quantification lié à la troncature :

$$\Delta tr_b{}^c = 2^{nb\_bitplanes\_tr_b{}^c} \quad (8)$$

A partir des relations (2) à (8) introduites précédemment, on peut déterminer la distorsion $D_b{}^c$ induite par l'étape de compression d'un codeur JPEG 2000 pour un code-bloc d'indice c appartenant à la sous-bande d'indice b en fonction d'informations extraites des marqueurs présents dans les entêtes du paquet qui contient ce code-bloc. Les relations suivantes résument les dépendances, représentées par l'intermédiaire des fonctions f et g, entre la distorsion, les deux termes de quantification et les informations extraites des entêtes :

$$D_b{}^c = \frac{\Delta_b{}^c}{12} = \frac{\Delta_b . \Delta tr_b{}^c}{12}$$

$$\Delta_b = f(R_B, \varepsilon_b, \mu_b, gain_b)$$

$$\Delta tr_b{}^c = g(M_b, IMSB_b{}^c, nb\_passes_b{}^c) \quad (9)$$

La deuxième étape du procédé selon l'invention consiste à estimer la distorsion liée à l'impact de la perte d'un paquet JPEG 2000 lors de sa transmission. Cette distorsion dépend en partie de la notion de couche de qualité associée à un code-bloc. Une couche de qualité d'indice i correspond au plan de bits de rang i tel qu'explicité précédemment à l'appui de la figure 3. A titre d'exemple, le plan des bits les plus significatifs correspond à une couche de qualité de base alors que tout plan de bits supplémentaire permet d'introduire une couche de qualité supplémentaire encore appelée couche de qualité de rehaussement ou de raffinement.

Deux cas de figure peuvent se présenter. Tout d'abord, si le paquet perdu est associé à une couche de qualité de rehaussement, alors la distorsion $D_b'^{c_i}$ résultante de la perte de ce paquet est égale à la distorsion de compression $D_b{}^{c_{i-1}}$ d'une couche de qualité inférieure transmise correctement. Si $c_i$ est l'indice du code-bloc correspondant à la $i^{ème}$ couche de qualité d'une sous bande d'indice b, on peut expliciter ce résultat à l'aide de la relation suivante :

$$D_b'^{c_i} = D_b{}^{c_{i-1}} \quad \text{pour } i > 1 \quad (10)$$

Si, au contraire, le paquet perdu est associé à une couche de qualité de base, alors la distorsion résultante est équivalente à l'énergie du code-bloc de la sous-bande considérée, c'est-à-dire à la distorsion de compression induite par un pas de quantification de taille infinie.

Pour estimer, dans ce dernier cas, la distorsion induite lors de la corruption ou la perte d'un code-bloc, on pose l'hypothèse que les coefficients issus de la transformée en ondelettes d'une sous-bande b suivent une loi statistique Gaussienne généralisée de variance $\sigma_b$ et de paramètre $\alpha_b$. Il est connu de l'Homme du métier, notamment à travers le document [1] qu'une relation existe entre le débit $L_b$ de la sous-bande b et la distorsion $D_b$ due à la compression dans chaque sous-bande b :

$$D_b = F(\alpha_b, \sigma_b) \times 2^{-2L_b} \quad (11)$$

avec $F(\alpha_b, \sigma_b)$ une fonction dépendant de la statistique d'une répartition gaussienne généralisée associée à une sous-bande b.

La distorsion totale $D_b$ de la sous-bande b est obtenue en moyennant les distorsions de compression $D^c_b$ de chaque code-bloc de la sous-bande b estimées précédemment à l'aide des relations (9) et compte tenu du nombre $T_b$ de coefficients de la sous-bande b :

$$D_b = \frac{\sum_{c=0}^{Ncb_b-1} D_b^{\;c}}{T_b} \quad (12),$$

où $Ncb_b$ est le nombre de code-blocs contenus dans la sous-bande b.

La relation (11) nécessite également de déterminer le débit $L_b$ de la sous-bande b qui est par ailleurs également nécessaire afin de modéliser la courbe de débit/distorsion de la sous-bande b. Le débit $L_b$ est égal à la somme des débits $L_b^c$ de chaque code-bloc appartenant à la sous-bande b et est obtenu à l'aide de la relation suivante :

$$L_b = \sum_{c=0}^{Ncb_b-1} L_b^{\;c} = \frac{\sum_{c=0}^{Ncb_b-1} L'_b^{\;c}}{T_b} \quad (13)$$

où $L'^c_b$ est la longueur en octets du code-bloc d'indice c qui peut être extraite de l'entête du paquet contenant ledit code-bloc. Le débit $L_b$ est exprimé en nombre de bits par pixels.

La distorsion liée à la perte de la sous-bande b équivaut à la distorsion résultante lorsque la sous-bande n'est pas transmise c'est-à-dire lorsque son débit $L_b$ vaut 0, ainsi on peut écrire :

$$D'_b = F(\alpha_b, \sigma_b) = D_b . 2^{2L_b} \quad (14)$$

A partir des relations (11) à (14) on peut donc déterminer $F(\alpha_b, \sigma_b)$ puis $D'_b$.

Enfin la distorsion $D_b'^{c_1}$ résultante de la perte d'un code-bloc d'indice $c_1$ correspondant à la première couche de qualité, c'est-à-dire la couche de qualité de base, s'écrit :

$$D_b'^{c_1} = \frac{D_b'}{T_b} T_b^{\;c} \quad (15)$$

où $T_b^c$ est le nombre de coefficients contenus dans le code-bloc d'indice c de la sous-bande b.

Les relations (10) et (15) obtenues précédemment permettent donc de déterminer la distorsion résultante de la perte d'un code-bloc quel que soit la couche de qualité considérée.

Si on considère que la compression selon le standard JPEG 2000 a engendré k couches de qualité pour un même code-bloc c d'une sous-bande b, alors la distorsion totale dudit code-bloc résultant de l'encodage puis de la transmission à travers un canal bruité peut s'écrire à l'aide de la relation suivante obtenue en regard de la relation (1) :

$$\tilde{D}_b^c = \prod_{i=1}^{k} \left(1 - P_{err\,b}{}^{c_i}\right) \cdot D_b^{c_k} + \sum_{i=1}^{k} \left( P_{err\,b}{}^{c_i} \prod_{j=1}^{i-1} \left(1 - P_{err\,b}{}^{c_j}\right) \cdot D_b'^{c_i} \right) \quad (16)$$

où $P_{err}{}^{ci}{}_b$ est la probabilité que le code-bloc d'indice c correspondant à la $i^{ème}$ couche de qualité de la sous-bande b soit erroné et $\Pi$ désigne un produit.

La relation (16) peut s'écrire encore de la façon suivante :

$$\tilde{D}_b^c = \prod_{i=1}^{k} \left(1 - P_{err\,b}{}^{c_i}\right) \cdot D_b^{c_k} + \sum_{i=2}^{k} \left( P_{err\,b}{}^{c_i} \prod_{j=1}^{i-1} \left(1 - P_{err\,b}{}^{c_j}\right) \cdot D_b^{c_{i-1}} \right) + P_{err\,b}{}^{c_1} \cdot \frac{D_b'}{T_b} T_b^c \quad (17)$$

La relation (17) permet donc de déterminer la sensibilité intrinsèque de chaque code-bloc JPEG 2000 à partir des informations contenues dans les en-têtes présents dans le flux compressé. Cette information de sensibilité peut être utilisée de façons diverses. Notamment, cette information permet de mettre en oeuvre un mécanisme de protection différenciée aux erreurs par ajout de redondance selon le standard JPWL ou tout autre mécanisme permettant d'allouer un code correcteur à chaque zone du flux compressé dont on a préalablement déterminé une estimation de sa sensibilité et de son débit à l'aide du procédé selon l'invention. On peut également choisir de ne pas transmettre un code-bloc qui présente une sensibilité trop importante en cherchant à minimiser la distorsion globale d'une image en regard d'une contrainte de débit total.

A partir des relations précédemment établies, on peut déduire pour une image entière le débit total $L_{tot}$ et l'erreur quadratique moyenne totale $MSE_{tot}$ en tenant compte des gains de reconstruction des filtres de synthèse.

$$MSE_{tot} = \sum_{b=0}^{Nsb-1} \alpha_b D_b \quad (18)$$

où $\alpha_b$ est le gain du filtre de reconstruction de la sous-bande b et Nsb est le nombre de sous-bandes dans une image.
Le débit total de l'image peut également être estimé à partir de la relation suivante :

$$L_{tot} = \sum_{b=0}^{Nsb-1} a_b L_b \quad (19)$$

avec $a_b$ le rapport entre le nombre de coefficients de la sous bande b et la taille de l'image en pixels.
Dans le cas d'une transmission avec ajout de redondance, il faut tenir compte de la redondance ajoutée dans le calcul du débit total ainsi que de l'influence du code correcteur associé à cette redondance dans la détermination de la probabilité d'erreur d'un code-bloc.

De façon générale, l'invention permet d'adapter le flux de données compressées en fonction de la nature et de l'état du canal de transmission.

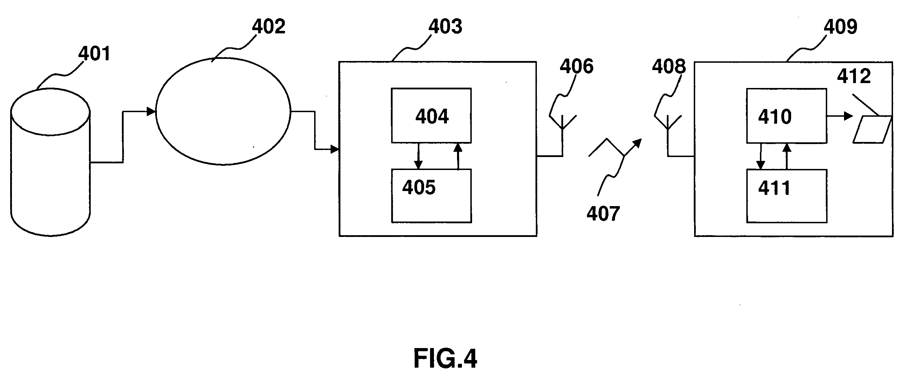

La figure 4 schématise un exemple de système adapté à exécuter les étapes du procédé selon l'invention.
Un serveur 401 de diffusion d'images compressées, par exemple un serveur JPEG 2000, transmet un flux d'images compressées à travers un réseau 402 lequel est relié à une station de base 403 comprenant un module 404 de transcodage du flux reçu et des couches d'accès radio 405. Le module de transcodage 404 est adapté à mettre en oeuvre le procédé d'estimation de débit/distorsion selon l'invention à partir du flux compressé reçu. Ce module peut également recevoir depuis les couches d'accès radio 405 des informations sur l'état du canal ou sur le débit disponible permettant d'utiliser l'estimation de débit/distorsion selon l'invention afin d'adapter le flux compressé ou de lui appliquer un mécanisme de protection contre les erreurs.

La station de base 403 est reliée à une antenne d'émission 406 apte à transmettre le flux d'images compressées à travers un canal sans fil 407 à destination d'une station mobile 409 qui reçoit ledit flux par l'intermédiaire d'une antenne réceptrice 408. La mobile 409 comprend notamment des couches d'accès radio 411 ainsi qu'un décodeur image 410 apte à décompresser le flux reçu et produire une ou plusieurs images 412.

Le procédé selon l'invention présente notamment l'avantage d'estimer le débit et la distorsion d'un flux d'images sans opérer de décompression de ce flux. Les estimées de débit et de distorsion selon l'invention permettent d'adapter le flux de données en fonction des conditions de transmission et notamment d'appliquer une stratégie de protection aux erreurs qui prend en compte la sensibilité intrinsèque de chaque zone du flux compressé. L'invention a encore comme avantage de permettre d'estimer a posteriori de la compression l'impact de la perte d'un paquet de données d'images. Le procédé selon l'invention peut s'appliquer directement au niveau du codeur source ou être intégré dans un module de transcodage ou bien encore à tout autre niveau d'une couche protocolaire tel que la couche transport ou réseau. Cet avantage permet d'adapter le flux de données à n'importe quel emplacement de la chaîne de transmission globale. Enfin l'invention peut être intégrée dans un mécanisme dit de Qualité de service connu sous l'abréviation anglo-saxonne QoS (Quality Of Service). En particulier, l'invention permet d'estimer une mesure de la qualité image en fonction des distorsions $D_b^c$ et $D_b'^c$ pondérée par un facteur de type psycho-visuel. Cette mesure, ou métrique, de la qualité psycho-visuelle d'une image peut être utilisée dans un mécanisme de gestion de la qualité de service puisqu'elle donne accès, à chaque point ou noeud de la chaîne de transmission d'une image, à une estimation de l'impact dû aux étapes précédentes en termes de dégradations de la qualité psycho-visuelle de l'image.

**Références**

[1] Christophe Parisot, « Allocations basées modèles et transformée en ondelettes au fil de l'eau pour le codage d'images et de vidéos », Thèse de l'université de Nice -Sophia Antipolis 20 janvier 2003
[2] Cyril Bergeron, Catherine Lamy-Bergot, « Procédé permettant de déterminer des paramètres de compression et de protection pour la transmission de données multimédia sur un canal sans fils » Brevet FR2903272
[3] International standard ISO/IEC 15444-1 ITU-T recommendation T.800 (08/2002)
[4] Information technology - JPEG 2000 image coding system - Part 11 : Wireless, ISO/IEC FCD 15444-11, 03/2005

**Revendications**

1.  Procédé d'estimation du débit et de la distorsion d'au moins une image (200) compressée à l'aide d'au moins une opération de transformée en ondelettes délivrant au moins une sous-bande b (202a,202b,202c,202d) contenant des coefficients, ladite sous-bande étant subdivisée en au moins un paquet (106) de coefficients associé à une couche de qualité c de la compression, ledit paquet (106) étant destiné à être transmis à travers un canal de propagation, ledit procédé comprenant au moins les étapes suivantes:

    ○ une étape d'estimation de la distorsion $D_b^c$ liée à la compression des coefficients dudit paquet (106),

    ○ une étape d'estimation du débit $L_b$ de compression de ladite sous-bande b,

    ○ une étape d'estimation de la distorsion $D_b'^c$, liée à la corruption ou à la perte dudit paquet (106) lors de sa transmission à travers le canal de propagation, de la façon suivante :

    ▪ si le paquet perdu est associé à une couche de qualité de rehaussement, alors la distorsion $D_b'^c$ est égale à la distorsion de compression $D_b^{c_{i-1}}$ d'une couche de qualité inférieure transmise correctement,

    ▪ si le paquet perdu est associé à une couche de base, alors la distorsion $D_b'^c$ est égale à

    $$D_b'^c = \frac{D_b'}{T_b} T_b^c$$ où $D_b'$ est la distorsion de corruption de la sous-bande b, $T_b$ est le nombre de coefficients de la sous-bande b et $T_b^c$ est le nombre de coefficients contenus dans le code-bloc d'indice c de la sous-bande b,

◦ une étape d'estimation de la sensibilité $\tilde{D}_b^c$ dudit paquet (106) en fonction des distorsions $D_b^c$ et $D_b'^c$ ,

◦ une étape d'estimation de la distorsion de ladite image (200) liée à la décompression dudit paquet (106) à partir de sa sensibilité $\tilde{D}_b^c$ .

2. Procédé selon la revendication 1 **caractérisé en ce que** l'étape d'estimation de la sensibilité est réalisée à l'aide de la relation suivante :

$$\tilde{D}_b^c = \prod_{i=1}^{k}\left(1 - P_{errb}^{c_i}\right)\cdot D_b^{c_k} + \sum_{i=2}^{k}\left(P_{errb}^{c_i}\prod_{j=1}^{i-1}\left(1 - P_{errb}^{c_j}\right)\cdot D_b^{c_{i-1}}\right) + P_{errb}^{c_1}\cdot\frac{D_b'}{T_b}T_b^c ,$$

où $P_{err}^{c_i}{}_b$ est la probabilité que le paquet d'indice $c_i$ correspondant à la couche de qualité i de la sous-bande b soit erroné, $D_b^{c_i}$ est sa distorsion de compression, $T_b^c$ et $T_b$ sont les nombres de coefficients respectivement contenus dans ledit paquet c et ladite sous-bande b.

3. Procédé selon la revendication 2 **caractérisé en ce que** l'estimée de la distorsion $D_b^c$ liée à la compression est obtenue à l'aide de la relation suivante:

$$D_b^c = \frac{\Delta_b^c}{12} = \frac{\Delta_b.\Delta tr_b^c}{12} ,$$

où $\Delta_b$ est un pas de quantification lié à la compression et $\Delta tr_b^c$ est un pas de quantification lié à une étape de troncature des coefficients résultant de la compression.

4. Procédé selon la revendication 3 **caractérisé en ce que** ledit paquet (106) comporte en outre un entête (101,102,103,104,107) de paquet et le pas de quantification $\Delta tr_b^c$ est obtenu à partir de paramètres caractéristiques de ladite sous-bande b tels que le nombre de bits de quantification des coefficients de ladite sous-bande b, le nombre de plans de bits à zéro, et le nombre de passes de codage appliquées aux plans de bits desdits coefficients, les valeurs desdits paramètres caractéristiques étant déterminés à partir desdits entêtes (101,102,103,104,107) dudit flux de données compressées.

5. Procédé selon la revendication 2 **caractérisé en ce que** l'estimée de la distorsion $D_b$ liée à la corruption de la sous-bande b est obtenue à l'aide de la relation suivante :

$$D_b' = D_b.2^{2L_b}$$

où $D_b$ est la distorsion liée à la compression de la sous-bande b

6. Procédé selon l'une des revendications précédentes **caractérisé en ce que** l'estimation du débit $L_b$ de la sous-bande b est obtenu en divisant la somme des longueurs exprimées en octets de tous les paquets inclus dans la sous-bande b par le nombre de coefficients contenus dans la sous-bande b.

7. Procédé selon l'une des revendications précédentes **caractérisé en ce qu'**il comprend en plus les sous étapes suivantes:

◦ une étape d'estimation de l'erreur quadratique moyenne de ladite image (200) compressée à partir de la

sensibilité $\tilde{D}_b^c$ de chaque paquet (106) dudit flux compressé.

o une étape d'estimation du débit total L de compression de ladite image (200) obtenu en faisant la somme des débits $L_b$ de chaque sous-bande b (202a,202b,202c,202d) pondérés par le rapport entre le nombre de coefficients de la sous-bande b et la taille de l'image (200) en pixels.

8. Procédé selon l'une des revendications précédentes **caractérisé en ce que** le mécanisme de compression d'images mis en oeuvre respecte le standard JPEG 2000 et ledit paquet (106) est un code-bloc.

9. Procédé selon l'une des revendications précédentes **caractérisé en ce qu'**il comprend en plus une étape de transcodage (404) au cours de laquelle lesdites estimées de débit $L_b^c$ et de sensibilité $\tilde{D}_b^c$ sont utilisées pour supprimer, protéger ou adapter le débit d'au moins un desdits paquets (106) du flux compressé.

10. Procédé selon la revendication 9 **caractérisé en ce que** ladite étape de transcodage (404) respecte le standard JPWL.

11. Utilisation du procédé selon l'une des revendications précédentes **caractérisée en ce que** les distorsions $D_b^c$ et $D_b'^c$ sont utilisées afin de déterminer une mesure de la qualité de ladite image (200).

## Patentansprüche

1. Verfahren zum Schätzen des Durchsatzes und der Verzerrung von wenigstens einem Bild (200), das mit wenigstens einem Wavelet-Transformationsvorgang komprimiert wurde, der wenigstens ein Koeffizienten enthaltendes Subband b (202a, 202b, 202c, 202d) liefert, wobei das Subband in wenigstens ein mit einer Kompressionsqualitätsschicht c assoziiertes Paket (106) von Koeffizienten unterteilt ist, wobei das Paket (106) zum Senden über einen Ausbreitungskanal bestimmt ist, wobei das Verfahren wenigstens die folgenden Schritte beinhaltet:

einen Schritt des Schätzens der Verzerrung $D_b^c$ in Verbindung mit der Kompression der Koeffizienten des Pakets (106);
einen Schritt des Schätzens des Kompressionsdurchsatzes $L_b$ von Subband b;
einen Schritt des Schätzens der Verzerrung $D_b'^c$ in Verbindung mit der Korruption oder dem Verlust des Pakets (106), wenn es durch den Ausbreitungskanal gesendet wird, auf die folgende Weise:

wenn das verlorene Paket mit einer Erhöhungsqualitätsschicht assoziiert ist, dann ist die Verzerrung $D_b'^c$ gleich der Kompressions Verzerrung $D_b^{c_{i-1}}$ einer korrekt gesendeten Schicht niederer Qualität;

wenn das verlorene Paket mit einer Basisschicht assoziiert ist, dann ist die Verzerrung $D_b'^c$ gleich

$$D_b'^c = \frac{D_b'}{T_b} T_b^c,$$ wobei $D_b'$ die Korruptionsverzerrung von Subband b ist, $T_b$ die Anzahl an Koeffizienten von Subband b ist und $T_b^c$ die Anzahl an im Blockcode von Index c von Subband b enthaltenen Koeffizienten ist;

einen Schritt des Schätzens der Empfindlichkeit $\tilde{D}_b^c$ des Pakets (106) in Abhängigkeit von den Verzerrungen $D_b^c$ und $D_b'^c$;

einen Schritt des Schätzens der Verzerrung des Bildes (200) in Verbindung mit der Dekompression des Pakets (106) auf der Basis seiner Empfindlichkeit $\tilde{D}_b^c$.

2. Verfahren nach Anspruch 1, **dadurch gekennzeichnet, dass** der Schritt des Schätzens der Empfindlichkeit anhand der folgenden Relation durchgeführt wird:

$$\tilde{D}_b^c = \prod_{i=1}^{k}\left(1-P_{errb}^{\ c_i}\right)\cdot D_b^{c_k} + \sum_{i=2}^{k}\left(P_{errb}^{\ c_i}\prod_{j=1}^{i-1}\left(1-P_{errb}^{\ c_j}\right)\cdot D_b^{c_{i-1}}\right) + P_{errb}^{\ c_1}\cdot\frac{\dot{D}_b}{T_b}T_b^c \quad ,$$

wobei $P_{err}^{\ ci}{}_b$ die Wahrscheinlichkeit ist, dass das Paket mit Index $c_i$, das der Qualitätsschicht i von Subband b entspricht, fehlerhaft ist, $D_b^{ci}$ seine Kompressionsverzerrung ist, $T_b^c$ und $T_b$ die Anzahlen an jeweils in Paket c und in Subband b enthaltenen Koeffizienten sind.

3. Verfahren nach Anspruch 2, **dadurch gekennzeichnet, dass** die Schätzung von Verzerrung $D_b^{\ c}$ in Verbindung mit der Kompression anhand der folgenden Relation erhalten wird:

$$D_b^c = \frac{\Delta_b^c}{12} = \frac{\Delta_b.\Delta tr_b^c}{12} \quad ,$$

wobei $\Delta_b$ ein Quantifizierungsschritt in Verbindung mit der Kompression ist und $\Delta tr_b^c$ ein Quantifizierungsschritt in Verbindung mit einem Schritt des Trunkierens der von der Kompression resultierenden Koeffizienten ist.

4. Verfahren nach Anspruch 3, **dadurch gekennzeichnet, dass** das Paket (106) ferner einen Paketkopf (101, 102, 103, 104, 107) umfasst und der Quantifizierungsschritt $\Delta tr_b^c$ auf der Basis von charakteristischen Parametern von Subband b wie der Anzahl von Quantifizierungsbits von Koeffizienten von Subband b, der Anzahl von Null-Bit-Ebenen und der Anzahl von auf die Bitebenen der Koeffizienten angewandten Codierdurchgängen erhalten wird, wobei die Werte der charakteristischen Parameter auf der Basis der Köpfe (101, 102, 103, 104, 107) des Flusses von komprimierten Daten ermittelt werden.

5. Verfahren nach Anspruch 2, **dadurch gekennzeichnet, dass** die Schätzung der Verzerrung $D_b^{'}$ in Verbindung mit der Korruption von Subband b anhand der folgenden Relation erhalten wird:

$$D_b^{'} = D_b.2^{2L_b} \quad ,$$

wobei $D_b$ die Verzerrung in Verbindung mit der Kompression von Subband b ist.

6. Verfahren nach einem der vorherigen Ansprüche, **dadurch gekennzeichnet, dass** die Schätzung des Durchsatzes $L_b$ von Subband b durch Dividieren der Summe der Längen, ausgedrückt in Byte, aller in Subband b enthaltenen Pakete durch die Anzahl von in Subband b enthaltenen Koeffizienten erhalten wird.

7. Verfahren nach einem der vorherigen Ansprüche, **dadurch gekennzeichnet, dass** es ferner die folgenden Teilschritte beinhaltet:

einen Schritt des Schätzens des mittleren quadratischen Fehlers des komprimierten Bildes (200) auf der Basis der Empfindlichkeit $\tilde{D}_b^{\ c}$ jedes Pakets (106) des komprimierten Flusses;
einen Schritt des Schätzens des gesamten Kompressionsdurchsatzes L des Bildes (200), erhalten durch Berechnen der Summe der Durchsätze $L_b$ jedes Subbandes b (202a, 202b, 202c, 202d), gewichtet durch das Verhältnis zwischen der Anzahl von Koeffizienten des Subbandes b und der Größe des Bildes (200) in Pixeln.

8. Verfahren nach einem der vorherigen Ansprüche, **dadurch gekennzeichnet, dass** der implementierte Bildkompressionsmechanismus dem JPEG 2000 Standard entspricht und das Paket (106) ein Blockcode ist.

9. Verfahren nach einem der vorherigen Ansprüche, **dadurch gekennzeichnet, dass** es ferner einen Transcodierschritt (404) beinhaltet, bei dem die Schätzungen des Durchsatzes $L_b^{\ c}$ und der Empfindlichkeit $\tilde{D}_b^{\ c}$ zum Unterdrücken, Schützen oder Adaptieren des Durchsatzes von wenigstens einem der Pakete (106) des komprimierten Flusses benutzt werden.

10. Verfahren nach Anspruch 9, **dadurch gekennzeichnet, dass** der Transcodierschritt (404) dem JPWL-Standard entspricht.

11. Anwendung des Verfahrens nach einem der vorherigen Ansprüche, **dadurch gekennzeichnet, dass** die Verzerrungen $D_b^c$ und $D_b^{\prime c}$ benutzt werden, um ein Maß für die Qualität des Bildes (200) zu ermitteln.

**Claims**

1. A method for estimating the throughput and the distortion of at least one image (200) compressed using at least one wavelet transform operation delivering at least one sub-band b (202a, 202b, 202c, 202d) containing coefficients, said sub-band being subdivided into at least one packet (106) of coefficients associated with a compression quality layer c, said packet (106) being intended to be transmitted through a propagation channel, said method comprising at least the following steps:

a step of estimating the distortion $D_b^c$ associated with the compression of the coefficients of said packet (106);

a step of estimating the compression throughput $L_b$ of said sub-band b;

a step of estimating the distortion $D_b^{\prime c}$ associated with the corruption or the loss of said packet (106) during the transmission thereof through said propagation channel, as follows:

if the lost packet is associated with an enhancement quality layer, then the distortion $D_b^{\prime c}$ is equal to the compression distortion $D_b^{c_{i-1}}$ of a correctly transmitted lower quality layer;

if the lost packet is associated with a base layer, then the distortion $D_b^{\prime c}$ equals $D_b^{\prime c} = \dfrac{D_b^{\prime}}{T_b} T_b^c$ ,

where $D_b^{\prime}$ is the corruption distortion of said sub-band b, $T_b$ is the number of coefficients of said sub-band b and $T_b{}^c$ is the number of coefficients contained in the block code of index c of said sub-band b;

a step of estimating the sensitivity $\tilde{D}_b^c$ of said packet (106) as a function of the distortions $D_b^c$ and $D_b^{\prime c}$ ;

a step of estimating the distortion of said image (200) associated with the decompression of said packet (106) on the basis of its sensitivity $\tilde{D}_b^c$ .

2. The method according to claim 1, **characterised in that** said step of estimating the sensitivity is carried out using the following relation:

$$\tilde{D}_b^c = \prod_{i=1}^{k}\left(1 - P_{errb}^{c_i}\right) \cdot D_b^{c_k} + \sum_{i=2}^{k}\left( P_{errb}^{c_i} \prod_{j=1}^{i-1}\left(1 - P_{errb}^{c_j}\right) \cdot D_b^{c_{i-1}} \right) + P_{errb}^{c_1} \cdot \frac{D_b^{\prime}}{T_b} T_b^c ,$$

where $P_{err}{}^{c_i}{}_b$ is the probability that the packet of index $c_i$ that corresponds to the quality layer i of said sub-band b is erroneous, $D_b^{c_i}$ is its compression distortion, $T_b^c$ and $T_b$ are the numbers of coefficients that are respectively contained in said packet c and said sub-band b.

**3.** The method according to claim 2, **characterised in that** the estimate of the distortion $D_b^c$ associated with the compression is obtained using the following relation:

$$D_b^c = \frac{\Delta_b^c}{12} = \frac{\Delta_b . \Delta tr_b^c}{12} \ ,$$

where $\Delta b$ is a quantification step associated with the compression and $\Delta tr_b^c$ is a quantification step associated with a step of truncating the coefficients resulting from the compression.

**4.** The method according to claim 3, **characterised in that** said packet (106) further comprises a packet header (101, 102, 103, 104, 107) and said quantification step $\Delta tr_b^c$ is obtained on the basis of characteristic parameters of said sub-band b, such as the number of quantification bits of the coefficients of said sub-band b, the number of zero bit planes and the number of coding passes applied to the bit planes of said coefficients, with the values of said characteristic parameters being determined on the basis of said headers (101, 102, 103, 104, 107) of said compressed data stream.

**5.** The method according to claim 2, **characterised in that** the estimate of the distortion $D_b'$ associated with the corruption of said sub-band b is obtained using the following relation:

$$D_b' = D_b . 2^{2L_b} \ ,$$

where $D_b$ is the distortion that is associated with the compression of the sub-band b.

**6.** The method according to any one of the preceding claims, **characterised in that** the estimate of the throughput $L_b$ of the sub-band b is obtained by dividing the sum of the lengths, expressed as bytes, of all of the packets included in the sub-band b by the number of coefficients contained in the sub-band b.

**7.** The method according to any one of the preceding claims, **characterised in that** it further comprises the following sub-steps:

a step of estimating the mean square error of said compressed image (200) on the basis of the sensitivity $\tilde{D}_b^c$ of each packet (106) of said compressed stream;

a step of estimating the total compression throughput L of said image (200) obtained by calculating the sum of the throughputs $L_b$ of each sub-band b (202a, 202b, 202c, 202d) weighted by the ratio between the number of coefficients of said sub-band b and the size of said image (200) in pixels.

**8.** The method according to any one of the preceding claims, **characterised in that** the mechanism for compressing images that is implemented complies with the JPEG 2000 standard and said packet (106) is a block code.

**9.** The method according to any one of the preceding claims, **characterised in that** it further comprises a transcoding step (404), during which said estimates of throughput $L_b^c$ and of sensitivity $\tilde{D}_b^c$ are used to suppress, protect or adapt the throughput of at least one of said packets (106) of said compressed stream.

**10.** The method according to claim 9, **characterised in that** said transcoding step (404) complies with the JPWL standard.

**11.** The use of the method according to any one of the preceding claims, **characterised in that** the distortions $D_b^c$ and $D_b'^c$ are used in order to determine a measurement of the quality of said image (200).

**101** Entête principal

**102** Entête de tuile

**106** Paquet

**107** Entête paquet

**108** Données entropiques

Paquet

**103** Entête de tuile

Paquet

Entête paquet

Données entropiques

Paquet

**104** Entête de tuile

Paquet

Paquet

**105** EOC

# FIG.1

200     200a     201a     202a     202b                                    204a

| | |
|---|---|
| | 1L |
| | 1H |

| | |
|---|---|
| 1LL | 1HL |
| 1LH | 1HH |

| 2L | |
|---|---|
| 2H | 1HL |
| 1LH | 1HH |

| 2LL | 2HL | 1HL |
|---|---|---|
| 2LH | 2HH | |
| 1LH | 1HH | |

200b          201b          202c    202d

**FIG.2**

FIG.3

EP 2 425 623 B1

**FIG.4**

EP 2 425 623 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2903272

**Littérature non-brevet citée dans la description**

- Optimal Error Protection for Real-Time Image and Video Transmission. **CHO S et al.** IEEE SIGNAL PROCESSING LETTERS. IEEE SERVICE CENTER, 01 Octobre 2004, vol. 11, 780-783

- **CHRISTOPHE PARISOT.** Allocations basées modèles et transformée en ondelettes au fil de l'eau pour le codage d'images et de vidéos. *Thèse de l'université de Nice -Sophia Antipolis,* 20 Janvier 2003
- *International standard,* Août 2002
- Information technology. *JPEG 2000 image coding system,* Mars 2005